# EUROPÄISCHE PATENTSCHRIFT

(11) **EP 3 807 121 B1**
(45) Veröffentlichungstag und Bekanntmachung des Hinweises auf die Patenterteilung: **07.01.2026**
(21) Anmeldenummer: 19731720.9
(22) Anmeldetag: 17.06.2019
(51) Int. Cl.: B60L 53/14, H02J 7/00, H04L 9/32, B60L 53/65, B60L 53/68, B60L 53/66, B60L 53/63, G06Q 10/02, G06Q 10/047, G06Q 10/04, G06Q 10/06, B60L 58/14, B60L 58/12, B60L 53/67, G01C 21/34

(54) **LADESYSTEM ZUR DYNAMISCHEN AUFLADUNG VON ELEKTROFAHRZEUGEN**
CHARGING SYSTEM FOR DYNAMICALLY CHARGING VEHICLES
SYSTÈME DE CHARGE POUR CHARGE DYNAMIQUE DES VÉHICULES

(30) Priorität: 18.06.2018 DE 102018114593
(43) Veröffentlichungstag der Anmeldung: 21.04.2021
(73) Patentinhaber: Top Ka-Projekt Gmbh, 70469 Stuttgart (DE)
(72) Erfinder: SCHUMACHER, Uli Erich, 70180 Stuttgart (DE)
(74) Vertreter: Holzwarth-Rochford, Andreas
(86) Internationale Anmeldenummer: PCT/EP2019/065908
(87) Internationale Veröffentlichungsnummer: WO 2019/243269

(56) Entgegenhaltungen:
- EP-A1- 3 056 862
- WO-A1-2013/039753
- WO-A1-2017/209736
- WO-A1-2018/021573
- US-A1- 2012 203 409

## Beschreibung

### Gebiet der Erfindung

Die Erfindung betrifft ein Ladesystem zur dynamischen Aufladung von Elektrofahrzeugen mit einer entsprechenden Software-Applikation und ein entsprechendes Verfahren sowie ein Datenspeicherprodukt mit darauf gespeicherter Software-Applikation.

### Hintergrund der Erfindung

Zur Abdeckung des Energiebedarfs von Elektrofahrzeugen werden Stromtankstellen genutzt, die die dafür benötigte elektrische Energie bereitstellen. Mit steigender Anzahl von Elektrofahrzeugen und dem Wunsch verbesserter Mobilität, insbesondere für Fernfahrten, ergibt sich die Problematik, dass unterschiedliche Nutzer mit unterschiedlichen Ladeanforderungen Stromtankstellen besuchen müssen, die möglicherweise weit abseits ihrer geplanten Fahrroute liegen und deren Ladekapazität oder Verfügbarkeit von Ladesäulen aufgrund eines zeitbedingten großen Andrangs an Kunden erschöpft sind und somit weitere Umwege in Kauf genommen werden müssen, ohne dass dabei die Elektrobatterie des Elektrofahrzeugs erschöpft werden darf. Dokument US 2015/0298565 A1 offenbart ein Ladeunterstützungssystem und ein entsprechendes Verfahren zur Unterstützung der Ladung eines Elektrofahrzeugs, das verhindern soll, dass Elektrofahrzeuge vor Erreichung ihres Fahrziels die Batterie entleeren und liegenbleiben. Ein Kontrollcenter überwacht dazu den Ladezustand einer Vielzahl an Elektrofahrzeugen und übermittelt diesen bei geringem Ladezustand eine Aufforderung, eine sich an einem bestimmten Punkt ortsfest befindliche Stromladestation anzufahren und führt die Elektrofahrzeuge zu einer dafür geeigneten Stromladestation, wobei für die Auswahl der Stromladestation die Gegebenheiten der Stromladestation (Anzahl an der dort verfügbaren Energiemenge, erwarteter Kundenandrang etc.) berücksichtigt werden.

Damit kann zwar verhindert werden, dass Elektrofahrzeuge während einer Überlandfahrt wegen entleerter Batterie liegenbleiben. Es wäre allerdings wünschenswert, ein Ladesystem für eine Aufladung einer Elektrobatterie zur Verfügung zu haben, mit dem die individuellen Bedürfnisse des Fahrers des Elektrofahrzeugs entlang seiner Route berücksichtigt und die Fahrzeuge möglichst effektiv aufgeladen werden. WO 2018/021573 A1, WO 2017/209736 A1 und US 2012/203409 A1 offenbaren jeweils Ladesystem zur dynamischen Aufladung von Elektrofahrzeugen umfassend eine zumindest auf mindestens einem mobilen Gerät, das eine Navigationsfunktion umfasst oder mit einem Navigationsgerät verbindbar ist, und/oder auf mindestens einem Server installierte und ausgeführte Software-Applikation und mobile Ladefahrzeuge mit Ladeeinheiten sowie jeweils einer Navigationseinrichtung.

### Zusammenfassung der Erfindung

Es ist daher eine Aufgabe der Erfindung, ein Ladesystem für eine Aufladung einer Elektrobatterie zur Verfügung zu stellen, das dazu ausgestaltet ist, die individuellen Bedürfnisse des Fahrers des Elektrofahrzeugs entlang seiner Route zu berücksichtigen und eine effektive Aufladung des Elektrofahrzeugs zu ermöglichen.

Diese Aufgabe wird gelöst durch ein Ladesystem zur dynamischen und simultanen Aufladung von mehreren Elektrofahrzeugen umfassend eine zumindest auf mindestens einem mobilen Gerät, das eine Navigationsfunktion umfasst oder mit einem Navigationsgerät verbindbar ist, und/oder auf mindestens einem Server installierte und ausgeführte Software-Applikation und eine Vielzahl an mobilen Ladefahrzeugen mit jeweils mehreren Ladeeinheiten sowie jeweils einer Navigationseinrichtung, die unter anderem dazu ausgestaltet ist, eine aktuelle Position eines jeden mobilen Ladefahrzeugs des Ladesystems der Software-Applikation zu übermitteln, wobei die Software-Applikation dazu ausgestaltet ist, auf dem sich in einem Elektrofahrzeug befindlichen mobilen Gerät zumindest das jeweils nächste mobile Ladefahrzeug anzuzeigen und im Falle einer aufzuladenden Elektrobatterie des Elektrofahrzeugs einen Ladewunsch für dieses Elektrofahrzeug sowie zumindest eine aktuelle Position des Elektrofahrzeugs an das angezeigte mobile Ladefahrzeug zu übermitteln, wobei die Navigationseinrichtung des Ladefahrzeugs dazu ausgestaltet ist, aufgrund des empfangenen Ladewunsches Koordinaten eines geeigneten gemeinsamen Treffpunktes und einer geeigneten Treffpunktzeit zur Aufladung der Elektrobatterie des Elektrofahrzeugs an das mobile Gerät im aufzuladenden Elektrofahrzeug zu übermitteln, wobei die Software-Applikation dazu ausgestaltet ist, Treffpunkt und Treffpunktzeit in Navigationsanweisungen für einen Fahrer des aufzuladenden Elektrofahrzeugs umzusetzen.

Aufgrund der Position beider Fahrzeuge (mobiles Ladefahrzeug und aufzuladendes Elektrofahrzeug) und des festgelegten gemeinsamen Treffpunkts wird ein dynamisches Aufladen ermöglicht, bei dem sich beide Fahrzeuge von den jeweiligen Ausgangspositionen auf den Treffpunkt hin bewegen und somit dynamisch einen effektiven Treffpunkt anfahren, was eine Zeitersparnis und Ressourcenschonung für das aufzuladende Elektrofahrzeug beziehungsweise dessen Fahrer im Vergleich zu einer ortsfesten Stromladestation (Stromtankstelle) bedeutet. Die Anzeige zumindest des nächsten Ladefahrzeugs kann auf einer auf einem Bildschirm, beispielsweise des mobilen Gerätes, dargestellten Karte mittels Darstellung eines entsprechenden Symbols oder Markers geschehen oder unter Angaben von Koordinaten oder Adressangaben erfolgen, die entsprechend anzufahren sind. Die Übermittlung des gemeinsamen Treffpunkts kann die implizite Auftragsbestätigung für die Aufladung des Elektrofahrzeugs gemäß übermittelten Ladewunsch sein. Es kann aber auch explizit eine Auftragsbestätigung vom Ladefahrzeug an die Software-Applikation auf dem mobilen Gerät versendet werden.

Der Begriff "Elektrofahrzeug" bezeichnet dabei alle Fahrzeuge mit einem Elektromotor inklusive Hybridfahrzeuge mit zusätzlichen anderen Motortypen. Der Begriff "Ladefahrzeug" bezeichnet dabei Fahrzeuge, die ein Energiereservoir zur Umwandlung in elektrische Energie umfassen und somit mobil an einem beliebigen Ort diese elektrische Energie zum Aufladen einer Fahrzeugbatterie zum Betrieb eines Elektrofahrzeugs bereitstellen können. Beispielsweise können solche Ladefahrzeuge LKWs mit entsprechender Ausrüstung sein. Diese Ladefahrzeuge können selbst mit einem Elektromotor angetrieben werden, können aber auch andere Motorentypen wie Verbrennungsmotor, Hybridmotor oder andere Motoren zur eigenen Fortbewegung umfassen. Die Navigationseinrichtung des mobilen Ladefahrzeugs bestimmt sowohl die aktuelle Position des Ladefahrzeugs als auch errechnet den gemeinsamen Treffpunkt. Die Navigationseinrichtung kann beispielsweise ein entsprechend in seiner Funktionalität erweitertes Navigationssystem sein. Die Treffpunktzeit kann dabei durch eventuell noch laufende Strombetankungen anderer Elektrofahrzeuge an einem vorangegangen vereinbarten Treffpunkt mit einem anderen Elektrofahrzeug beeinflusst werden, weil in solchen Fällen das Ladefahrzeug nicht sofort zum neuen gemeinsamen Treffpunkt starten kann. Sofern der Ladewunsch entsprechend frühzeitig übermittelt wurde, stellt dies kein Hindernis für den gemeinsamen Treffpunkt dar, sondern hat bestenfalls auf die Position des gemeinsamen Treffpunkts Einfluss, sodass sich dieser gegebenenfalls weiter entlang der geplanten Fahrroute des aufzuladenden Elektrofahrzeugs in Richtung des Fahrziels des Elektrofahrzeugs verschiebt.

Der Begriff "Software-Applikation" bezeichnet dabei eine Anwendungssoftware (auch Anwendungsprogramm, kurz Anwendung oder Applikation (APP) genannt), die Computerprogramme bezeichnet, die genutzt werden, um eine nützliche oder gewünschte nicht systemtechnische Funktionalität zu bearbeiten oder zu unterstützen. Mobile APPs (auf mobilen Geräten) können beispielsweise über einen in das mobile Betriebssystem integrierten APP-Store bezogen und direkt auf dem Gerät installiert werden. Mobile Web-APPs können über den Webbrowser des mobilen Geräts abgerufen werden. Als Installation wird die Installation der Software-Applikation auf dem mobilen Gerät selbst oder einer Schnittstelle zur Nutzung eines entsprechenden Anwenderprogramms über eine Webseite bezeichnet. Als Ausführung der Software-Applikation wird die Ausführung über einen Prozessor des mobilen Geräts oder die Verarbeitung von Daten, die über eine Web-APP dem mobilen Gerät über die Schnittstelle bereitgestellt werden, bezeichnet.

Der Begriff "mobiles Geräte" bezeichnet dabei ein Gerät, das zur Herstellung einer Funk- oder Internetverbindung mit anderen Geräten ausgestaltet ist und über einen Anzeigebildschirm verfügt. Solche mobilen Geräte sind beispielsweise Smartphones, Tablet-PCs, Laptops, digitale Kommunikationsgeräte oder Navigationsgeräte, auf denen Software-Applikationen installiert und ausgeführt werden können. Insbesondere kann es sich um ein IOS- oder Android Smartphone, ein in dem Fahrzeug installiertes Gerät, wie ein Android Device und/oder ein Mediensystem des Fahrzeugs handeln. Die Navigationsfunktion des mobilen Geräts ermöglicht dabei, die von der Software-Applikation erstellten Navigationsanweisungen zum Erreichen des geeigneten gemeinsamen Treffpunkts in eine Navigationsroute zum Treffpunkt umzuwandeln, anhand derer der Fahrer zum gemeinsamen Treffpunkt mit dem Ladefahrzeug fahren kann. Alternativ ist das mobile Gerät an ein Navigationsgerät anschließbar, wobei mittels geeigneter Schnittstellen die Navigationsanweisungen der Software-Applikation durch das Navigationsgerät im Elektrofahrzeug in eine entsprechende Navigationsroute verarbeitet werden. Sofern sich das mobile Gerät an Bord eines Elektrofahrzeugs befindet, ist die Position des mobilen Geräts identisch mit der Position des Elektrofahrzeugs. Somit kann als Positionsinformation des Elektrofahrzeugs entweder die aktuelle Position des mobilen Geräts oder die aktuelle Position des Elektrofahrzeugs aus einem dort befindlichen Navigationsgerät über das mobile Gerät zum Ladefahrzeug übermittelt werden.

Das erfindungsgemäße, dynamische Ladesystem ermöglicht somit eine effektive Aufladung des Elektrofahrzeugs und berücksichtigt dabei die individuellen Bedürfnisse des Kunden des Elektrofahrzeugs und betrachtet im Gegensatz zum Stand der Technik den Ladevorgang nicht ausschließlich aus Sicht der örtlich festen Stromladestation, sondern kombiniert die Gegebenheiten der mobilen Ladestation mit der Position und Ladesituation des Elektrofahrzeugs und gegebenenfalls seiner Bewegungsdaten zu einem effektiveren Aufladevorgang für das Elektrofahrzeug im Vergleich zum Stand der Technik.

In einer Ausführungsform erstellt die Software-Applikation die Navigationsanweisungen aus gemeinsamen Treffpunkt und Treffpunktzeit für das Elektrofahrzeug erst, nachdem über die Software-Applikation eine Bestätigung des Aufladewunsches am gemeinsamen Treffpunkt an das Ladefahrzeug übermittelt wurde. Damit kann der Fahrer des Elektrofahrzeugs zuerst prüfen, ob der gemeinsame Treffpunkt und die Treffpunktzeit für ihn und den Ladezustand seines Elektrofahrzeugs akzeptabel sind. Falls nicht, kann das Elektrofahrzeug gegebenenfalls seine Route fortsetzen und nach Anzeige eines anderen zu einem späteren Zeitpunkt nächsten mobilen Ladefahrzeugs die Aufladung durch das angebotene Ladefahrzeug wahrnehmen. Dadurch erhält das Ladesystem für den Fahrer des Elektrofahrzeugs eine Flexibilität, die seine Kundenwünsche noch stärker berücksichtigen kann.

Ferner kann ein Datenaustausch zwischen dem Server und dem Mobilgerät und/oder eine Datenspeicherung und/oder ein Datenaustausch innerhalb der Software-Applikation zumindest teilweise unter Nutzung von Distributed Ledger Technologie (DLT), insbesondere ein Blockchain-System erfolgen. Dies erhöht die Sicherheit aufgrund des besseren Schutzes vor Datenverlust und/oder zusätzliche Verschlüsselung der Daten.

In einer weiteren Ausführungsform wird der gemeinsame Treffpunkt und die Treffpunktzeit unter Berücksichtigung zumindest einer bisherigen Route des aufzuladenden Elektrofahrzeugs von der Navigationseinrichtung des mobilen Ladefahrzeugs bestimmt, wobei die Software-Applikation die bisherige Route anhand von entsprechend aufgezeichneten Positionsdaten mit dem Ladewunsch an das mobile Ladefahrzeug übermittelt. Durch die Berücksichtigung der bisherigen Route kann das Fahrverhalten des Elektrofahrzeugs wie beispielsweise momentane Geschwindigkeit, bisherige Durchschnittsgeschwindigkeit und daraus abzuleitende zukünftige Bewegungsrichtung bei der Berechnung eines geeigneten gemeinsamen Treffpunkts zu Grunde gelegt werden, wodurch die Route des Elektrofahrzeugs für die gewünschte Aufladung noch weniger gestört wird als wenn nur die momentane Position des Elektrofahrzeugs zum Zeitpunkt der Übermittlung des Ladewunsches zu Grunde gelegt wird. Die bisherige Route kann durch die Software-Applikation aus einem an das mobile Gerät angeschlossenen Navigationsgerät entnommen werden oder aber durch die Software-Applikation aufgrund einer vorhandenen Navigationsfunktion im mobilen Gerät selbst aufgezeichnet werden, beispielsweise anhand von der zeitlichen Abfolge der GPS-Daten, die das mobile Gerät mittels eines GPS-Moduls selbst bestimmt.

In einer weiteren Ausführungsform übermittelt die Software-Applikation zusätzlich zur bisherigen Route auch die für das Elektrofahrzeug bis zu einem Routenziel geplante Route an das Ladefahrzeug und die Navigationseinrichtung des Ladefahrzeugs berücksichtigt die geplante Route zur Berechnung des gemeinsamen Treffpunkts und der Treffpunktzeit. Unter Berücksichtigung der weiteren geplanten Route kann der gemeinsame Treffpunkt und die entsprechende Treffpunktzeit noch besser auf die Bedürfnisse des Fahrers des Elektrofahrzeugs abgestimmt werden, sodass die Route des Elektrofahrzeugs für die gewünschte Aufladung noch weniger gestört wird. Ebenso kann hier die geplante Route des Elektrofahrzeugs durch die Software-Applikation aus einem an das mobile Gerät angeschlossenen Navigationsgerät entnommen werden oder aber durch die Software-Applikation aufgrund einer vorhandenen Navigationsfunktion im mobilen Gerät selbst bereitgestellt werden.

In einer weiteren Ausführungsform berechnet die Navigationseinrichtung des Ladefahrzeugs automatisch die schnellste Route für das Ladefahrzeug zum Treffpunkt und zeigt diese im Ladefahrzeug als Fahrroute an. Dadurch erreicht das Ladefahrzeug den gemeinsamen Treffpunkt am schnellsten, was den räumlichen Bereich möglicher geeigneter gemeinsamer Treffpunkte unter Berücksichtigung der Kundenwünsche und einer möglichst geringen Störung der Route des Elektrofahrzeugs erweitert.

In einer weiteren Ausführungsform übermittelt die Navigationseinrichtung des Ladefahrzeugs auf einem Weg zum gemeinsamen Treffpunkt zumindest periodisch die aktuelle Position des Ladefahrzeugs an die Software-Applikation für eine Abfrage im Elektrofahrzeug. Damit kann bis zur Treffpunktzeit ständig überprüft werden, ob der gemeinsame Treffpunkt vom Ladefahrzeug wie geplant zur Treffpunktzeit erreicht werden kann. Gegebenenfalls könnte das Elektrofahrzeug bei einer ungeplanten Verzögerung den gemeinsamen Treffpunkt stornieren und einen anderen Treffpunkt, gegebenenfalls mit einem anderen mobilen Ladefahrzeug vereinbaren.

In einer weiteren Ausführungsform ist die Software-Applikation dazu ausgestaltet, die aktuelle Position des Ladefahrzeugs auf dem Weg zum gemeinsamen Treffpunkt auf einer Navigationsanzeige im Elektrofahrzeug anzuzeigen. Durch eine solche Anzeige erhält der Fahrer des Elektrofahrzeugs eine einfache visuelle und damit unmittelbare Kontrolle, ob die Vereinbarungen über Treffpunkt und Treffpunktzeit eingehalten werden können.

In einer weiteren Ausführungsform ist die Software-Applikation dazu ausgestaltet, alle Positionen aller Ladefahrzeuge anzuzeigen, um eine Auswahl eines gewünschten Ladefahrzeugs für die Aufladung des Elektrofahrzeugs zu ermöglichen. Auch kann in einer Ausführungsform alternativ oder zusammen mit den vorangegangenen Ausführungsformen der Fahrer des Elektrofahrzeugs einen gemeinsamen Treffpunkt vorschlagen und ist damit nicht auf den vom Ladefahrzeug berechneten und übermittelten Treffpunkt angewiesen. Damit kann der Fahrer des Elektrofahrzeugs bereits im Vorfeld seiner Fahrt entlang einer Fahrroute seine Tankstopps hocheffizient planen. So kann er beispielsweise auch in der Mittagszeit einen Treffpunkt an einer Raststätte mit dem Ladefahrzeug verabreden oder das Elektrofahrzeug während eines Termins (beispielsweise eines Kundenbesuchs) auf dem Gelände seines Geschäftspartners aufladen lassen, wozu die Software-Applikation die notwendigen Möglichkeiten bietet.

In einer weiteren Ausführungsform verfügt das Ladefahrzeug über einen Energie- bzw. Batteriespeicher von mehr als 300 kWh und über mindestens eine DC-Ladeeinheit und mindestens eine AC-Ladeeinheit. Damit können alle gängigen Elektrofahrzeuge geladen werden. Das Ladefahrzeug kann auch mehr DC- oder AC-Ladestation umfassen, beispielsweise jeweils zwei DC-Ladeeinheiten und zwei AC-Ladeeinheiten. Somit kann ein gemeinsamer Treffpunkt auf die mehr als nur ein Elektrofahrzeug vereinbart werden, sofern die Routen der jeweiligen Elektrofahrzeuge dies als sinnvoll und als geringe Störung der Routen der jeweiligen Elektrofahrzeuge erscheinen lassen.

Die Abrechnung der Aufladung des Elektrofahrzeugs kann dabei auf Basis der Fahrzeit zum Treffpunkt und der Ladezeit jeweils auf Zeitbasis oder auf Basis der Fahrzeit zum Treffpunkt und der geladenen Energiemenge erfolgen.

Die Erfindung betrifft des Weiteren ein Verfahren zur dynamischen und simultanen Aufladung von mehreren Elektrofahrzeugen in einem erfindungsgemäßen Ladesystem umfassend eine zumindest auf mindestens einem mobilen Gerät, das eine Navigationsfunktion umfasst oder jeweils mit einem Navigationsgerät verbindbar ist, installierte und ausgeführte Software-Applikation und eine Vielzahl an mobilen Ladefahrzeugen mit jeweils mehreren Ladeeinheiten sowie jeweils einer Navigationseinrichtung, umfassend folgende Schritte realisiert werden:
- Übermitteln von aktuellen Positionen eines jeden mobilen Ladefahrzeugs des Ladesystems an die Software-Applikation durch die Navigationseinrichtung des Ladefahrzeugs;
- Anzeigen zumindest des jeweils nächsten mobilen Ladefahrzeugs auf dem sich in einem Elektrofahrzeug befindlichen mobilen Gerät durch die Software-Applikation;
- Übermitteln eines Ladewunsches für das Elektrofahrzeug sowie zumindest einer aktuellen Position des Elektrofahrzeugs an das angezeigte mobile Ladefahrzeug im Falle einer aufzuladenden Elektrobatterie des Elektrofahrzeugs durch die Software-Applikation;
- Übermitteln von Koordinaten eines geeigneten gemeinsamen Treffpunktes und einer geeigneten Treffpunktzeit zur Aufladung der Elektrobatterie des Elektrofahrzeugs aufgrund des empfangenen Ladewunsches an das mobile Gerät im aufzuladenden Elektrofahrzeug durch die Navigationseinrichtung des Ladefahrzeugs; und
- Umsetzen von Treffpunkt und Treffpunktzeit in Navigationsanweisungen für einen Fahrer des aufzuladenden Elektrofahrzeugs durch die Software-Applikation zur Navigation des Elektrofahrzeugs zum gemeinsamen Treffpunkt.

Dieses erfindungsgemäße Verfahren ermöglicht somit eine effektive Aufladung des Elektrofahrzeugs und berücksichtigt dabei die individuellen Bedürfnisse des Kunden des Elektrofahrzeugs und betrachtet im Gegensatz zum Stand der Technik den Ladevorgang nicht ausschließlich aus Sicht der örtlich festen Stromladestation, sondern kombiniert die Gegebenheiten der mobilen Ladestation mit der Position und Ladesituation des Elektrofahrzeugs und gegebenenfalls seiner Bewegungsdaten zu einem wesentlich effektiveren Aufladevorgang für das Elektrofahrzeug im Vergleich zum Stand der Technik.

In einer Ausführungsform des Verfahrens umfasst dieses den zusätzlichen Schritt des Bestimmens des gemeinsamen Treffpunkts und der Treffpunktzeit unter Berücksichtigung zumindest einer bisherigen Route des aufzuladenden Elektrofahrzeugs von der Navigationseinrichtung des mobilen Ladefahrzeugs, wobei die Software-Applikation die bisherige Route anhand von entsprechend aufgezeichneten Positionsdaten zusammen mit dem Ladewunsch an das mobile Ladefahrzeug übermittelt hat.

In einer weiteren Ausführungsform des Verfahrens übermittelt die Software-Applikation zusätzlich zur bisherigen Route auch die für das Elektrofahrzeug bis zu einem Routenziel geplante Route an das Ladefahrzeug und die Navigationseinrichtung des Ladefahrzeugs berücksichtigt die geplante Route zur Berechnung des gemeinsamen Treffpunkts und der Treffpunktzeit.

In einer weiteren Ausführungsform des Verfahrens umfasst dieses den zusätzlichen Schritt des zumindest periodischen Übermittelns der aktuellen Position des Ladefahrzeugs auf einem Weg zum gemeinsamen Treffpunkt durch die Navigationseinrichtung an die Software-Applikation für eine Abfrage im Elektrofahrzeug.

In einer weiteren Ausführungsform des Verfahrens umfasst dieses den zusätzlichen Schritt des Anzeigens der aktuellen Position des Ladefahrzeugs auf dem Weg zum gemeinsamen Treffpunkt durch die Software-Applikation auf einer Navigationsanzeige im Elektrofahrzeug.

In einer weiteren Ausführungsform des Verfahrens zeigt die Software-Applikation alle Positionen aller Ladefahrzeuge an, um eine Auswahl eines gewünschten Ladefahrzeugs für die Aufladung des Elektrofahrzeugs zu ermöglichen gefolgt vom Auswählen eines der angezeigten Ladefahrzeuge als das Ladefahrzeug für eine Aufladung der Elektrobatterie des Elektrofahrzeugs.

In einem weiteren Beispiel des Verfahrens schlägt die Software-Applikation dem Ladefahrzeug einen Treffpunkt und/oder eine gemeinsame Treffpunktzeit vor, die vom Ladefahrzeug als gemeinsamer Treffpunkt und gemeinsame Treffpunktzeit übernommen wird. Der vorgeschlagene Treffpunkt beziehungsweise die vorgeschlagene Treffpunktzeit kann von einem Bediener des mobilen Geräts, beispielsweise dem Fahrer des Elektrofahrzeugs, in dieses eingegeben werden, wozu die Software-Applikation eine entsprechende Eingabemaske zur Verfügung stellt. Der gewünschte Treffpunkt kann beispielsweise durch Angabe der Ortskoordinaten oder durch Markieren eines entsprechenden Punktes auf einer als Karte gestalteten Eingabemaske eingegeben werden.

Des Weiteren kann ein Datenspeicherprodukt mit einer auf dem Datenspeicherprodukt gespeicherten Software-Applikation geeignet zur Ausführung der auf die Software-Applikation bezogenen Schritte des Verfahrens zur dynamischen Aufladung realisiert werden.

Datenspeicherprodukte können dabei jegliche Datenspeicher geeignet zur Speicherung von Software-Programmen wie Software-Applikationen sein, beispielsweise Datensticks, CDs, Festplatten, Server und andere dafür geeignete Geräte.

Die voranstehend aufgelisteten Ausführungsformen der dynamischen Aufladung können einzeln oder in beliebiger Kombination zueinander zur Ausgestaltung der erfindungsgemäßen Vorrichtung zur dynamischen Aufladung und des erfindungsgemäßen Verfahrens zur dynamischen Aufladung verwendet werden.

Es ist ersichtlich, dass das digitale Zugangssystem die dynamische Ladung dadurch unterstützen kann, dass dem Ladefahrzeug, insbesondere einem Insassen, wie einem Fahrer, einer Serviceperson oder einem anderen Mitarbeiter, ermöglicht wird, Zugang zu dem Elektrofahrzeug zur Ladung des Energiespeichers bzw. Akkumulators gewährt wird. So kann beispielsweise eine Ladeklappe für eine elektrische Ladung des Elektrofahrzeugs freigegeben werden. Dazu werden dem Ladefahrzeug bzw. dem Insassen Daten zum Aktivieren der Freischalteinheit zumindest für einen Zeitraum durch die Aktivierungseinheit übermittelt.

Die Aktivierung der Freischalteinheit kann insbesondere wie folgt durchgeführt werden.

Wesentliche Komponenten sind dabei die Software-Applikation, die mit dem zu ladenden Fahrzeug wechselwirkt. Bei der Software-Applikation handelt es sich insbesondere um eine servergestützte Applikation, welche insbesondere eingehende Informationen der zu ladenden Fahrzeuge und/oder der Ladefahrzeuge auswertet, die Ladefahrzeuge steuert, Treffpunkte festlegt und/oder die Abrechnung regelt.

Die Wechselwirkung mit dem zu ladenden Fahrzeug kann dadurch erreicht werden, dass die Software-Applikation teilweise auf einem Mobilgerät installiert ist und/oder auf einem Mobilgerät eine mit der Software-Applikation verbundene mobile Applikation installiert ist und ausgeführt wird, wobei insbesondere über eine OBD2-Schnittstelle des Fahrzeugs Zugriff auf notwendige Fahrzeugdaten zur Verfügung gestellt wird.

Vorzugsweise erfolgt die Kommunikation zwischen den auf dem Server und dem Mobilgerät installierten Teilen der Software-Applikation, insbesondere die Weiterleitung und Speicherung der insbesondere für die Steuerung des Zugangs zu dem zu ladenden Fahrzeug, die Ladung des zu ladenden Fahrzeugs und die Abrechnung der Ladung notwendigen Daten, unter Einsatz von DLT, insbesondere über eine Block-Chain-Anwendung. Dadurch wird eine mehrfach redundante Sicherheit für alle Regelungs-, Vertrags- und Abrechnungsvorgänge herstellt, die jedoch im definierten Bereich transparent für alle Partner ist.

Beispielswiese erhält das Mobilgerät bzw. die mobile Applikation über die OBD2-Schnittstelle alle wesentlichen Informationen vom zu ladenden Fahrzeug, wie z.B. Fahrweise, Ladekapazität und Ladezustand des Akkumulators, Temperatur und Position.

Der auf dem Mobilgerät ausgeführte Teil der Software-Applikation bzw. die mobile Applikation kennt darüber hinaus das Reiseziel, wenn notwendig den Abstellplatz des zu ladenden Fahrzeugs, hat Zugriff auf Navigationsdaten und Verkehrslage und ist mit dem Internet verbunden.

Die Software-Applikation berechnet, wann das zu ladende Fahrzeug sich mit einem Ladefahrzeug wo treffen muss und wieviel elektrische Energie benötigt wird.

Dabei wird die DLT, insbesondere Blockchaintechnologie, genutzt, um die entsprechenden Daten an den Server zu übermitteln bzw. diese Daten zu speichern. Der Server, mittels dem die zu ladenden Fahrzeuge und die Ladefahrzeuge überwacht werden, bestätigt über die DLT bzw. Blockchain dem auf dem Mobilgerät ausgeführten Teil der Software-Applikation bzw. der mobilen Applikation das Treffen des zu ladenden Fahrzeugs und den geplanten Treffpunkt. Diese sind jedoch nicht statisch, sondern können aufgrund von der Software-Applikation und/oder der mobilen Applikation erfassten Veränderungen angepasst werden.

Die Software-Applikation erhält ferner auch Daten, die es ermöglichen, über das Zugangssystem dem Ladefahrzeug einen Zugang zu dem zu ladenden Fahrzeug für die Ladung zu ermöglichen. Dies kann unabhängig von der Verwendung der DLT bzw. Blockchaintechnologie erfolgen. Bevorzugt ist dabei, dass die Daten nur über eine begrenzte Gültigkeitsdauer verfügen, die an den geplanten Zeitpunkt des Treffens zwischen Ladefahrzeug und zu ladendem Fahrzeug angepasst ist. Bevorzugt ermöglichen die Daten nur einen Zugang eine bestimmte Zeit vor bzw. nach einem berechneten Zeitpunkt des Treffens. Die Daten können beispielsweise einen Code umfassen, der nur einmalig genutzt werden kann. Nach der einmaligen Nutzung oder dem Verstreichen des Gültigkeitszeitraumes kann der Code nicht mehr für einen Zugang zu dem zu ladenden Fahrzeug genutzt werden. Die zum Zugang notwendigen Daten werden insbesondere wie folgt generiert bzw. übertragen.

Persönliche Daten der beteiligten Personen, wie zum Beispiel Bewegungsprofile, verbleiben als hochsensible Daten innerhalb der auf dem Mobilgerät ausgeführten Teil der Softwareapplikation bzw. der mobilen Applikation in dem zu ladenden Fahrzeug. Das Mobilgerät meldet nur eine ID des Kunden und Zeit und den Ort des geplanten Treffpunktes an den Server. Dabei erfolgt die Übertragung der Daten insbesondere über die DLT bzw. Blockchain verschlüsselt.

Für jeden Ladevorgang wird dabei ein neuer DLT bzw. Blockchain Vorgang generiert. Auch neue Aufträge des gleichen Kunden oder Wiederholungsaufträge führen zu einem neuen DLT bzw. Blockchain-Vorgang. Auf diese Weise wird verhindert, dass individuelle Auftragsdaten, Zugangscodes oder andere mit dem Ladevorgang in Zusammenhang stehende Daten wiederverwendet werden können, nachdem der Ladevorgang abgeschlossen und die Blockchain geschlossen wurde. Aufgrund der Verschlüsselung durch die DLT bzw. Blockchain ist ein Abfischen von diesen Daten nicht so möglich, dass die Daten missbraucht werden können, da die Daten nutzlos für andere Lade- bzw. Zahlungsvorgänge sind. So ist jeder Ladeauftrag einmalig und aufgrund der DLT bzw. Blockchain Technologie nicht veränderbar.

Mit einem einzelnen Blockchainvorgang wird eine individuelle Auftragsnummer verknüpft, mit der nur ein einzelner Ladevorgang bzw. Ladeauftrag ausgelöst werden kann.

Der Server kann insbesondere als ein leistungsstarker geclusterter Server ausgebildet sein oder als Cloudanwendung ausgebildet sein. Der Server steuert alle Ladefahrzeuge und handelt mit dem zu ladenden Fahrzeug mögliche Treffpunkte innerhalb der übermittelten Parameter aus. Dazu werden von der Software-Applikation mittels Blockchain alle für die Abarbeitung des Ladevorgangs notwendigen Daten ermittelt, mit den realen Gegebenheiten und Möglichkeiten abgeglichen und dem Benutzer des zu ladenden Fahrzeugs eine Auftragsbestätigung angeboten. Kommt es zu einer Annahme der Auftragsbestätigung, werden die für den Ladevorgang notwendigen Daten, insbesondere Code für das Zugangssystem, Treffpunkt, Treffpunktzeit an das zu ladende Fahrzeug, das Ladefahrzeug, insbesondere den Betreiber des zu ladenden Fahrzeugs bzw. den Betreiber des Ladefahrzeugs, übermittelt.

Ferner wird über die Software-Applikation die Durchführung der Ladung veranlasst und überwacht, wobei dieser Vorgang, insbesondere aufgrund der Verwendung der Blockchain-Technologie, nach Annahme der Auftragsbestätigung um einen automatischen Ablauf, in den grundsätzlich nicht eingegriffen werden kann. Kommt es zu einer Panne eines Ladefahrzeugs wird ein neuer Blockchain Vorgang generiert und dieser dann mit einem alternativen Ladefahrzeug durchgeführt.

Die Verwendung der DLT bzw. Blockchain bietet den Vorteil, dass auf bestehende Blockchain-Anwendung aufgebaut werden kann und damit neben der logistischen Abwicklung des Ladevorganges auch Zahlungs- und Abrechnungsvorgänge bzw. deren Formalitäten abgewickelt werden können.

Der Server bzw. die Software-Applikation kann alle Verträge mit den Betreibern der zu ladenden Fahrzeuge bzw. der Ladefahrzeuge verwalten, alle Vorgänge abrechnen und steuern.

Der Server bietet ferner über die DLT- bzw. Blockchain eine Schnittstelle zu Partnern, wie Stromanbietern, anderen Anbietern von Ladefahrzeugen oder dem Flottenmanagement von Firmen und Organisationen.

Die DLT bzw. Blockchain kann als ERC20/ERC223 Lösung realisiert sein und insbesondere auf einer bestehenden Blockchain-Anwendung ablaufen.

Aus dem zuvor angeführten ergibt sich der Vorteil, dass die in dem Ladesystem verwendete DLT bzw. Blockchain Technoloige die Aufgabe einer dezentralen mehrfach redundanten Datenbank wahrnimmt und die Möglichkeit bietet, darüber hinaus das Vertragsmanagement über Smart Contracts (elektronische automatische Verträge) mit hoher Sicherheit durchzuführen und zu automatisieren.

Es wird so möglich, eine verschlüsselte Verbindung zum Austausch der notwendigen Daten zwischen allen Parteien bereitzustellen, wobei bevorzugt durch Smart Contracts geregelt wird, wer Zugriff auf welche Daten hat und wer welche Informationen wie einsehen kann.

Die Abrechnung kann bevorzugt über eigene Token, welche vorzugsweise ebenfalls durch Smart Contracts mit klassischen Zahlungsanbietern, wie Kreditkartenanbietern, am SEPA-Zahlungsverkehr Beteiligten und/oder Anbietern wie PayPal, verbunden sind, erfolgen.

Durch die Verwendung der DLT bzw. Blockchain-Technologie ist eine Optimierung von Kosten aufgrund der reduzierten für die Abwicklung der Ladung notwendigen Hard- und Software-Struktur sowie den hohen Grad an Automatisierung und der damit einhergehenden Reduzierung manueller Eingriffe möglich, ohne die Sicherheit zu reduzieren. Ferner verbessert die Verwendung dieser Technologie sichere und klar geregelte Kommunikationsmöglichkeiten zwischen einer unbegrenzten Anzahl von Partnern. Die Server- oder Cloudressourcen sowie die Software-Applikation bzw. die mobile Applikation müssen keine angreifbaren Schnittstellen öffnen.

Weiterhin umfasst die Beschreibung die folgenden Figuren, mittels denen weitere Aspekte des zuvor beschriebenen dynamischen Ladesystems erläutert werden.

Diese und andere Aspekte der Erfindung werden im Detail in den Abbildungen wie folgt gezeigt.

### Kurze Beschreibung der Abbildungen

Diese und andere Aspekte der Erfindung werden im Detail in den Abbildungen wie folgt gezeigt.
- Fig.1:: schematische Darstellung einer Ausführungsform des erfindungsgemäßen Ladesystems;
- Fig.2:: schematische Darstellung einer Ausführungsform des Elektrofahrzeugs mit mobilem Gerät und darauf installierter erfindungsgemäßer Software-Applikation für das dynamische Ladesystem;
- Fig.3:: schematische Darstellung der Berechnung des gemeinsamen Treffpunkts anhand von Positions- und Bewegungsdaten des Elektrofahrzeugs;
- Fig.4:: schematische Darstellung des Ladefahrzeugs des dynamischen Ladesystems;
- Fig.5:: schematische Darstellung des Datenspeicherprodukts mit darauf gespeicherter Software-Applikation für die Durchführung des dynamischen Ladesystems; und
- Fig.6:: schematische Darstellung einer Ausführungsform des Verfahrens für die dynamische Ladung.

### Detaillierte Beschreibung der Ausführungsbeispiele

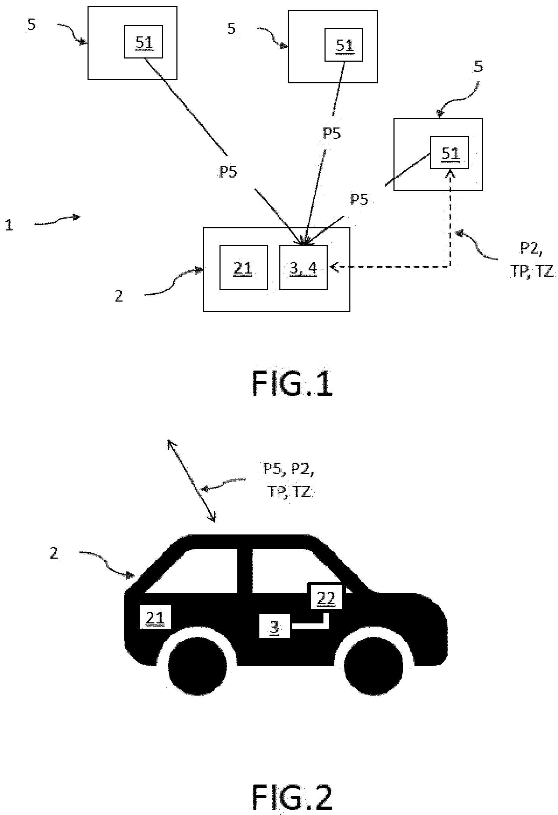

**Fig.1** zeigt eine schematische Darstellung einer Ausführungsform des erfindungsgemäßen Ladesystems 1 zur dynamischen Aufladung von Elektrofahrzeugen 2 umfassend ein oder mehrere mobile Geräte 3 (hier ist aus Übersichtsgründen exemplarisch nur ein mobiles Gerät in einem Elektrofahrzeug 2 dargestellt), die jeweils eine Navigationsfunktion umfassen oder mit einem Navigationsgerät 22 im jeweiligen Elektrofahrzeug 2 verbindbar sind und eine auf dem jeweiligen mobilen Gerät 3 installierte und ausgeführte Software-Applikation 4 sowie eine Vielzahl an mobilen Ladefahrzeugen 5 mit jeweils einer Navigationseinrichtung 51, die unter anderem dazu ausgestaltet ist, eine aktuelle Position P5 eines jeden mobilen Ladefahrzeugs 5 des Ladesystems 1 der Software-Applikation 4 zu übermitteln. Die Software-Applikation 4 ist dabei dazu ausgestaltet, auf dem sich in einem Elektrofahrzeug 2 befindlichen mobilen Gerät 3 zumindest das jeweils nächste mobile Ladefahrzeug 5 anzuzeigen und im Falle einer aufzuladenden Elektrobatterie 21 des Elektrofahrzeugs 2 einen Ladewunsch für dieses Elektrofahrzeug 2 sowie zumindest eine aktuelle Position P2 des Elektrofahrzeugs 2 an das angezeigte mobile Ladefahrzeug 5 zu übermitteln, wobei die aktuelle Position des mobilen Geräts mit der aktuellen Position P2 des Elektrofahrzeugs 2 gleichgesetzt wird, da sich das mobile Gerät 3 an Bord des Elektrofahrzeugs 2 befindet. Die Navigationseinrichtung 51 des Ladefahrzeugs 5 ist wiederum dazu ausgestaltet, aufgrund des empfangenen Ladewunsches Koordinaten eines geeigneten gemeinsamen Treffpunktes TP und einer geeigneten Treffpunktzeit TZ zur Aufladung der Elektrobatterie 21 des Elektrofahrzeugs 2 an das mobile Gerät 3 im aufzuladenden Elektrofahrzeug 2 zu übermitteln, wobei die Software-Applikation 4 dazu ausgestaltet ist, Treffpunkt TP und Treffpunktzeit TZ in Navigationsanweisungen für einen Fahrer des aufzuladenden Elektrofahrzeugs 2 umzusetzen. Hierbei kann die Software-Applikation 4 die Navigationsanweisungen aus gemeinsamen Treffpunkt TP und Treffpunktzeit TZ für das Elektrofahrzeug 2 auch erst dann erstellen, nachdem über die Software-Applikation 4 eine Bestätigung des Aufladewunsches am gemeinsamen Treffpunkt TP an das Ladefahrzeug 5 übermittelt wurde. In einer Ausführungsform kann die Software-Applikation 4 auch dazu ausgestaltet sein, alle Positionen P5 aller Ladefahrzeuge 5 anzuzeigen, um eine Auswahl eines gewünschten Ladefahrzeugs 5 für die Aufladung des Elektrofahrzeugs 2 durch einen Bediener des mobilen Geräts (beispielsweise der Fahrer des Elektrofahrzeugs 2) zu ermöglichen.
**Fig.2** zeigt eine schematische Darstellung einer Ausführungsform des Elektrofahrzeugs 2 mit einer Elektrobatterie 21 zum Betrieb des Elektrofahrzeugs 2 und mit einem mobilem Gerät 3 und darauf installierter erfindungsgemäßer Software-Applikation 4. Hierbei kann die Software-Applikation 4 dazu ausgestaltet sein, Treffpunkt TP und Treffpunktzeit TZ in Navigationsanweisungen für einen Fahrer des aufzuladenden Elektrofahrzeugs 2 umzusetzen, wobei die Software-Applikation 4 die aktuelle Position P5 des Ladefahrzeugs 5 auf dem Weg zum gemeinsamen Treffpunkt TP auf einer Navigationsanzeige im Elektrofahrzeug 2 anzeigen kann. Die Navigationsanzeige kann dabei der Bildschirm des mobilen Geräts 3 oder der Bildschirm des mit dem mobilen Gerät 3 verbundenen Navigationsgerät 22 im Elektrofahrzeug 2 sein. Dazu kann das mobile Gerät 3 beispielsweise über ein Kabel oder eine Schnittstelle für kabellose Nahfeldkommunikation (beispielsweise Bluetooth) mit dem Navigationsgerät 22 verbunden sein. Die Software-Applikation 4 stellt entsprechende Schnittstellen zur Datenübertragung auf das Navigationsgerät 22 bereit. In einer Ausführungsform kann die Navigationseinrichtung 51 des Ladefahrzeugs 5 auf einem Weg zum gemeinsamen Treffpunkt TP zumindest periodisch die jeweils aktuelle Position P5 des Ladefahrzeugs 5 an die Software-Applikation 4 für eine Abfrage im Elektrofahrzeug 2 übermitteln, bis das Ladefahrzeug 5 den gemeinsamen Treffpunkt TP erreicht hat.

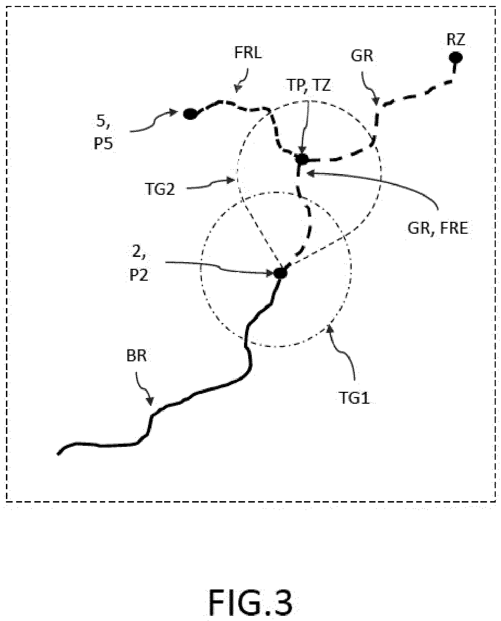

**Fig.3** zeigt eine schematische Darstellung der Berechnung des gemeinsamen Treffpunkts TP anhand von Positions- und Bewegungsdaten des Elektrofahrzeugs 2 sowie die Fahrwege FRE, FRL des Ladefahrzeugs 5 und des Elektrofahrzeugs 2 zum gemeinsamen Treffpunkt TP. Sofern zusammen mit dem Ladewunsch lediglich die aktuelle Position P2 des Elektrofahrzeugs 2 an das angezeigte mobile Ladefahrzeug 5 übermittelt wird, kann die Navigationseinrichtung 51 des Ladefahrzeugs 5 ohne Kenntnis der bisherigen Route BR und der geplanten zukünftigen Route GR des Elektrofahrzeugs 2 nur ein Treffpunktgebiet TG1 (durch eine Strich-Punkt-Line dargestellter Kreis) um die aktuellen Position P2 des Elektrofahrzeugs 2 zur Berechnung eines geeigneten gemeinsamen Treffpunktes TP zu Grunde legen, dessen Durchmesser beispielsweise von den Straßenverhältnissen und anzunehmenden Geschwindigkeiten der beiden Fahrzeuge 2, 5 bestimmt wird. Wird dagegen der gemeinsame Treffpunkt TP und die Treffpunktzeit TZ unter Berücksichtigung einer bisherigen Route BR des aufzuladenden Elektrofahrzeugs 2 von der Navigationseinrichtung 51 des mobilen Ladefahrzeugs 5 bestimmt, kann auf Basis der Annahme, dass sich der bisherige Routenverlauf in etwa so fortsetzen wird, ein anderes Treffpunktgebiet TG2 unter Extrapolation der bisherigen Route BR des Elektrofahrzeugs 2 in eine entsprechende Vorwärtsbewegung angenommen werden, hier als tropfenförmiges Gebiet TG2 gestrichelt dargestellt. Ein gemeinsamer Treffpunkt im Gebiet TG2 stört die Route des Elektrofahrzeugs 2 deutlich weniger als ein Treffpunkt im Gebiet TG1 basierend lediglich auf der aktuellen Position P2 des Elektrofahrzeugs 2 zum Zeitpunkt der Übermittlung des Ladewunsches. Hierzu übermittelt die Software-Applikation 4 die bisherige Route BR anhand von entsprechend aufgezeichneten Positionsdaten mit dem Ladewunsch an das mobile Ladefahrzeug 5. Falls die Software-Applikation 4 zusätzlich zur bisherigen Route BR auch noch die für das Elektrofahrzeug 2 bis zu einem Routenziel RZ geplante Route GR an das Ladefahrzeug 5 übermittelt, kann die Navigationseinrichtung 51 des Ladefahrzeugs 5 die geplante Route GR zur Berechnung des gemeinsamen Treffpunkts TP und der Treffpunktzeit TZ berücksichtigen, wie in Fig.3 dargestellt ist. Hier liegt der gemeinsame Treffpunkt TP exakt auf der geplanten Route GP des Elektrofahrzeugs 2 zum Routenziel RZ. Damit stört die geplante Aufladung der Elektrobatterie 21 des Elektrofahrzeugs 2 die Route BR,GR des Elektrofahrzeugs 2 überhaupt nicht, da der gemeinsame Treffpunkt TP und die Fahrstrecke FRE des Elektrofahrzeugs 2 zum Treffpunkt TP der geplanten Route GR entspricht und somit keine Umwege und damit verbundene zusätzliche Fahrzeiten in Kauf genommen werden müssen. Hierbei kann die Navigationseinrichtung 51 des Ladefahrzeugs 5 automatisch die schnellste Route für das Ladefahrzeug 5 zum Treffpunkt TP berechnen und im Ladefahrzeug 5 als Fahrroute FRL anzeigen.

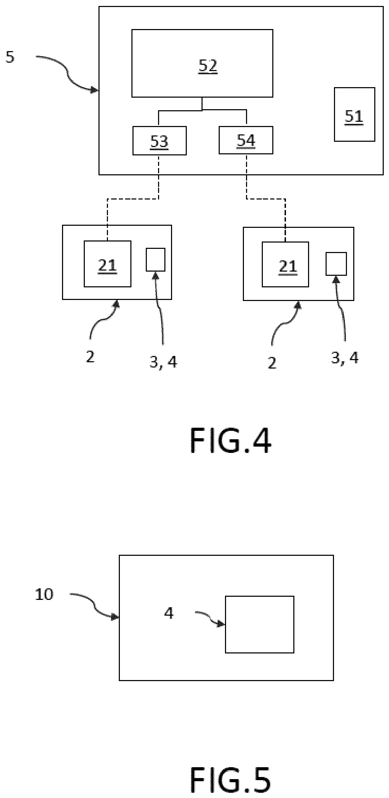

**Fig.4** zeigt eine schematische Darstellung des erfindungsgemäßen Ladefahrzeugs 5, das hier neben der Navigationseinrichtung 51 über einen Batteriespeicher 52 von mehr als 300 kWh und über eine DC-Ladeeinheit 53 und eine AC-Ladeeinheit 54 verfügt. Andere Ladefahrzeuge können auch über mehr DC- und/oder AC-Ladeeinheiten 53, 54 verfügen. Die mehreren Ladeeinheiten 53, 54 ermöglichen das simultane Aufladen mehrerer Elektrofahrzeuge 2 jeweils mit Elektrobatterie 21 und mobilen Geräten 3, auf denen jeweils die Software-Applikationen 4 installiert und ausgeführt werden.

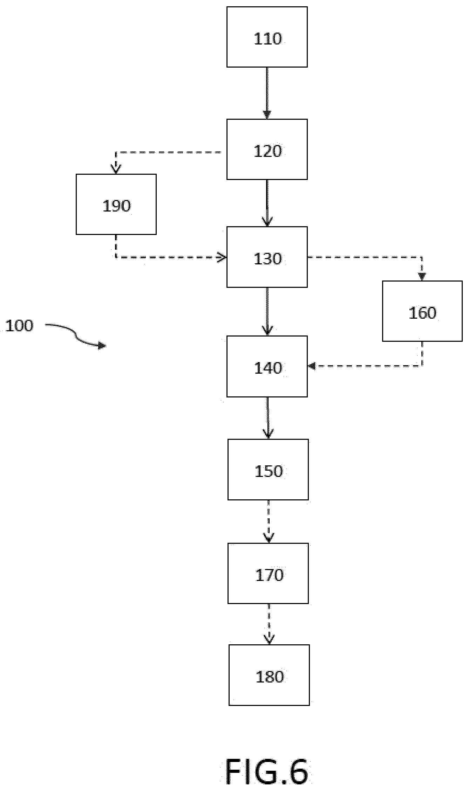

**Fig.5** zeigt eine schematische Darstellung des erfindungsgemäßen Datenspeicherprodukts 10 mit darauf gespeicherter Software-Applikation 4, die zur Ausführung der auf die Software-Applikation 4 bezogenen Schritte des Verfahrens 100 gemäß Fig.6 geeignet ist. Datenspeicherprodukte 10 können dabei jegliche Datenspeicher geeignet zur Speicherung von Software-Programmen wie Software-Applikationen sein, beispielsweise Datensticks, CDs, Festplatten, Server und andere dafür geeignete Geräte.
**Fig.6** zeigt eine schematische Darstellung einer Ausführungsform des erfindungsgemäßen Verfahrens 100 zur dynamischen Aufladung von Elektrofahrzeugen in einem erfindungsgemäßen Ladesystem umfassend eine zumindest auf einem mobilen Gerät 3, das eine Navigationsfunktion umfasst oder jeweils mit einem Navigationsgerät 22 verbindbar ist, installierte und ausgeführte Software-Applikation 4 und eine Vielzahl an mobilen Ladefahrzeugen 5 mit jeweils einer Navigationseinrichtung 51. Das Verfahren umfasst in dieser Ausführungsform die Schritte des Übermittelns 110 von aktuellen Positionen P5 eines jeden mobilen Ladefahrzeugs 5 des Ladesystems 1 an die Software-Applikation 4 durch die Navigationseinrichtung 51 des Ladefahrzeugs 5; des Anzeigens 120 zumindest des jeweils nächsten mobilen Ladefahrzeugs 5 auf dem sich in einem Elektrofahrzeug 2 befindlichen mobilen Gerät 3 durch die Software-Applikation; des Übermittelns 130 eines Ladewunsches für das Elektrofahrzeug 2 sowie zumindest einer aktuellen Position P2 des Elektrofahrzeugs 2 an das angezeigte mobile Ladefahrzeug 5 im Falle einer aufzuladenden Elektrobatterie 21 des Elektrofahrzeugs 2 durch die Software-Applikation; des Übermittelns 140 von Koordinaten eines geeigneten gemeinsamen Treffpunktes TP und einer geeigneten Treffpunktzeit TZ zur Aufladung der Elektrobatterie 21 des Elektrofahrzeugs 2 aufgrund des empfangenen Ladewunsches an das mobile Gerät 3 im aufzuladenden Elektrofahrzeug 2 durch die Navigationseinrichtung 51 des Ladefahrzeugs 5; und des Umsetzens 150 von Treffpunkt TP und Treffpunktzeit TZ in Navigationsanweisungen für einen Fahrer des aufzuladenden Elektrofahrzeugs 2 durch die Software-Applikation 4 zur Navigation des Elektrofahrzeugs 2 zum gemeinsamen Treffpunkt TP. In einer Ausführungsform (gestrichelter Pfeil) umfasst das Verfahren den zusätzlichen Schritt des zumindest periodischen Übermittelns 170 der aktuellen Position P5 des Ladefahrzeugs 5 auf einem Weg zum gemeinsamen Treffpunkt durch die Navigationseinrichtung 51 an die Software-Applikation 4 für eine Abfrage im Elektrofahrzeug 2 sowie das Anzeigen 180 der aktuellen Position P5 des Ladefahrzeugs 5 auf dem Weg zum gemeinsamen Treffpunkt TP durch die Software-Applikation 4 auf einer Navigationsanzeige im Elektrofahrzeug 2. Nachfolgend zu Schritt 130 kann das Verfahren den zusätzlichen Schritt des Bestimmens 160 des gemeinsamen Treffpunkts TP und der Treffpunktzeit TZ unter Berücksichtigung zumindest einer bisherigen Route BR des aufzuladenden Elektrofahrzeugs 2 von der Navigationseinrichtung 51 des mobilen Ladefahrzeugs 5 umfassen, wobei die Software-Applikation 4 die bisherige Route BR anhand von entsprechend aufgezeichneten Positionsdaten zusammen mit dem Ladewunsch an das mobile Ladefahrzeug 5 übermittelt hat. Außerdem kann die Software-Applikation 4 zusätzlich zur bisherigen Route BR auch die für das Elektrofahrzeug 2 bis zu einem Routenziel RZ geplante Route GR an das Ladefahrzeug 5 übermitteln und die Navigationseinrichtung 51 des Ladefahrzeugs 5 die geplante Route GR zur Berechnung 160 des gemeinsamen Treffpunkts TP und der Treffpunktzeit TZ berücksichtigen.

Die hier gezeigten Ausführungsformen dürfen daher nicht einschränkend verstanden werden.

### Bezugszeichenliste

- 1: Erfindungsgemäßes Ladesystem zur dynamischen Aufladung von Elektrofahrzeugen
- 2: (aufzuladendes) Elektrofahrzeug
- 21: Elektrobatterie des Elektrofahrzeugs
- 22: Navigationsgerät im Elektrofahrzeug
- 3: mobiles Gerät
- 4: Software-Applikation
- 5: mobiles Ladefahrzeug
- 51: Navigationseinrichtung des Ladefahrzeugs
- 52: Batteriespeicher des Ladefahrzeugs
- 53: DC-Ladeeinheit des Ladefahrzeugs
- 54: AC-Ladeeinheit des Ladefahrzeugs
- 10: Datenspeicherprodukt

- 100: erfindungsgemäßes Verfahren zur dynamischen Aufladung von Elektrofahrzeugen
- 110: Übermitteln von aktuellen Position der Ladefahrzeuge an die Software-Applikation
- 120: Anzeigen zumindest des nächsten Ladefahrzeugs auf dem mobilen Gerät
- 130: Übermitteln eines Ladewunsches für das Elektrofahrzeug an das Ladefahrzeug
- 140: Übermitteln von Koordinaten vom gemeinsamen Treffpunkt und der Treffpunktzeit an das mobile Gerät
- 150: Umsetzen von Treffpunkt und Treffpunktzeit in Navigationsanweisungen für einen Fahrer des aufzuladenden Elektrofahrzeugs
- 160: Bestimmens des gemeinsamen Treffpunkts und der Treffpunktzeit unter Berücksichtigung zumindest einer bisherigen Route des aufzuladenden Elektrofahrzeugs
- 170: zumindest periodisches Übermitteln der aktuellen Position des Ladefahrzeugs auf einem Weg zum gemeinsamen Treffpunkt an die Software-Applikation
- 180: Anzeigen der aktuellen Position des Ladefahrzeugs auf dem Weg zum gemeinsamen Treffpunkt durch die Software-Applikation im Elektrofahrzeug
- 190: Auswählen eines der angezeigten Ladefahrzeuge als das Ladefahrzeug für eine Aufladung der Fahrzeugbatterie

- BR: bisherigen Route des aufzuladenden Elektrofahrzeugs
- FRL: Fahrroute des Ladefahrzeugs zum gemeinsamen Treffpunkt
- FRE: Fahrroute des Elektrofahrzeugs zum gemeinsamen Treffunkt
- GP: geplante Route des Elektrofahrzeugs
- P2: aktuelle Position des Elektrofahrzeugs
- P5: aktuelle Position des Ladefahrzeugs
- RZ: Routenziel des Elektrofahrzeugs
- TG1: mögliches Treffpunktgebiet mit Berücksichtigung der aktuellen Position des Elektrofahrzeugs
- TG2: mögliches Treffpunktgebiet mit Berücksichtigung der bisherigen Route des Elektrofahrzeugs
- TP: Treffpunkt für Ladefahrzeug und aufzuladendem Elektrofahrzeug
- TZ: Treffpunktzeit für das Treffen von Ladefahrzeug und aufzuladendem Elektrofahrzeug

## Patentansprüche

1. Ein Ladesystem (1) zur dynamischen und simultanen Aufladung von mehreren Elektrofahrzeugen (2) umfassend eine zumindest auf mindestens einem mobilen Gerät (3), das eine Navigationsfunktion umfasst oder mit einem Navigationsgerät (22) verbindbar ist, und auf mindestens einem Server installierte und ausgeführte Software-Applikation (4) und eine Vielzahl an mobilen Ladefahrzeugen (5) mit jeweils mehreren Ladeeinheiten (53, 54) sowie jeweils einer Navigationseinrichtung (51), die unter anderem dazu ausgestaltet ist, eine aktuelle Position (P5) eines jeden mobilen Ladefahrzeugs (5) des Ladesystems (1) der Software-Applikation (4) zu übermitteln, wobei die Software-Applikation (4) dazu ausgestaltet ist, auf dem sich in einem Elektrofahrzeug (2) befindlichen mobilen Gerät (3) zumindest das jeweils nächste mobile Ladefahrzeug (5) anzuzeigen und im Falle einer aufzuladenden Elektrobatterie (21) des Elektrofahrzeugs (2) einen Ladewunsch für dieses Elektrofahrzeug (2) sowie zumindest eine aktuelle Position (P2) des Elektrofahrzeugs (2) an das angezeigte mobile Ladefahrzeug (5) zu übermitteln, wobei die Navigationseinrichtung (51) des Ladefahrzeugs (5) dazu ausgestaltet ist, aufgrund des empfangenen Ladewunsches Koordinaten eines geeigneten gemeinsamen Treffpunktes (TP) und einer geeigneten Treffpunktzeit (TZ) zur Aufladung der Elektrobatterie (21) des Elektrofahrzeugs (2) an das mobile Gerät (3) im aufzuladenden Elektrofahrzeug (2) zu übermitteln, wobei die Software-Applikation (4) dazu ausgestaltet ist, Treffpunkt (TP) und Treffpunktzeit (TZ) in Navigationsanweisungen für einen Fahrer des aufzuladenden Elektrofahrzeugs (2) umzusetzen.

2. Das Ladesystem (1) nach Anspruch 1,
**dadurch gekennzeichnet,**
**dass** die Software-Applikation (4) die Navigationsanweisungen aus gemeinsamen Treffpunkt (TP) und Treffpunktzeit (TZ) für das Elektrofahrzeug (2) erst erstellt, nachdem über die Software-Applikation (4) eine Bestätigung des Aufladewunsches am gemeinsamen Treffpunkt (TP) an das Ladefahrzeug (5) übermittelt wurde und/oder ein Datenaustausch zwischen dem Server und dem Mobilgerät und/oder eine Datenspeicherung und/oder ein Datenaustausch innerhalb der Software-Applikation zumindest teilweise unter Nutzung von Distributed Ledger Technologie (DLT), insbesondere eines Blockchain-Systems, erfolgt.

3. Das Ladesystem (1) nach Anspruch 1 oder 2,
**dadurch gekennzeichnet,**
**dass** der gemeinsame Treffpunkt (TP) und die Treffpunktzeit (TZ) unter Berücksichtigung zumindest einer bisherigen Route (BR) des aufzuladenden Elektrofahrzeugs (2) von der Navigationseinrichtung (51) des mobilen Ladefahrzeugs (5) bestimmt wird, wobei die Software-Applikation (4) die bisherige Route (BR) anhand von entsprechend aufgezeichneten Positionsdaten mit dem Ladewunsch an das mobile Ladefahrzeug (5) übermittelt, wobei insbesondere die Software-Applikation (4) zusätzlich zur bisherigen Route (BR) auch die für das Elektrofahrzeug (2) bis zu einem Routenziel (RZ) geplante Route (GR) an das Ladefahrzeug (5) übermittelt und die Navigationseinrichtung (51) des Ladefahrzeugs (5) die geplante Route (GR) zur Berechnung des gemeinsamen Treffpunkts (TP) und der Treffpunktzeit (TZ) berücksichtigt.

4. Das Ladesystem (1) nach einem der voranstehenden Ansprüche 1 bis 3,
**dadurch gekennzeichnet,**
**dass** die Navigationseinrichtung (51) des Ladefahrzeugs (5) automatisch die schnellste Route für das Ladefahrzeug (5) zum Treffpunkt (TP) berechnet und im Ladefahrzeug (5) als Fahrroute (FRL) anzeigt.

5. Das Ladesystem (1) nach einem der voranstehenden Ansprüche 1 bis 4,
**dadurch gekennzeichnet,**
**dass** die Navigationseinrichtung (51) des Ladefahrzeugs (5) auf einem Weg zum gemeinsamen Treffpunkt (TP) zumindest periodisch die aktuelle Position (P5) des Ladefahrzeugs (5) an die Software-Applikation (4) für eine Abfrage im Elektrofahrzeug (2) übermittelt, wobei vorzugsweise die Software-Applikation (4) dazu ausgestaltet ist, die aktuelle Position (P5) des Ladefahrzeugs (5) auf dem Weg zum gemeinsamen Treffpunkt (TP) auf einer Navigationsanzeige im Elektrofahrzeug (2) anzuzeigen.

6. Das Ladesystem (1) nach einem der voranstehenden Ansprüche 1 bis 5,
**dadurch gekennzeichnet,**
**dass** die Software-Applikation (4) dazu ausgestaltet ist, alle Positionen (P5) aller Ladefahrzeuge (5) anzuzeigen, um eine Auswahl eines gewünschten Ladefahrzeugs (5) für die Aufladung des Elektrofahrzeugs (2) zu ermöglichen.

7. Das Ladesystem (1) nach einem der voranstehenden Ansprüche,
**dadurch gekennzeichnet,**
**dass** die Software-Applikation (4) dazu ausgestaltet ist, dem Ladefahrzeug (5) einen Treffpunkt (TP) und/oder eine gemeinsame Treffpunktzeit (TZ) vorzuschlagen, die vom Ladefahrzeug (5) als gemeinsamer Treffpunkt (TP) und gemeinsame Treffpunktzeit (TZ) übernommen wird.

8. Das Ladesystem (1) nach einem der voranstehenden Ansprüche 1 bis 7,
**dadurch gekennzeichnet,**
**dass** das Ladefahrzeug (5) über einen Energiespeicher und/oder Batteriespeicher (52) von mehr als 300 kWh und über mindestens eine DC-Ladeeinheit (53) und mindestens eine AC-Ladeeinheit (54) verfügt.

9. Ein Verfahren (100) zur dynamischen und simultanen Aufladung von mehreren Elektrofahrzeugen in einem Ladesystem nach einem der Ansprüche 1 bis 8 umfassend eine zumindest auf einem mobilen Gerät (3), das eine Navigationsfunktion umfasst oder jeweils mit einem Navigationsgerät (22) verbindbar ist, installierte und ausgeführte Software-Applikation (4) und eine Vielzahl an mobilen Ladefahrzeugen (5) mit jeweils mehreren Ladeeinheiten (53, 54) sowie jeweils einer Navigationseinrichtung (51), umfassend folgende Schritte:
- Übermitteln (110) von aktuellen Positionen (P5) eines jeden mobilen Ladefahrzeugs (5) des Ladesystems (1) an die Software-Applikation (4) durch die Navigationseinrichtung (51) des Ladefahrzeugs (5);
- Anzeigen (120) zumindest des jeweils nächsten mobilen Ladefahrzeugs (5) auf dem sich in einem Elektrofahrzeug (2) befindlichen mobilen Gerät (3) durch die Software-Applikation;
- Übermitteln (130) eines Ladewunsches für das Elektrofahrzeug (2) sowie zumindest einer aktuellen Position (P2) des Elektrofahrzeugs (2) an das angezeigte mobile Ladefahrzeug (5) im Falle einer aufzuladenden Elektrobatterie (21) des Elektrofahrzeugs (2) durch die Software-Applikation;
- Übermitteln (140) von Koordinaten eines geeigneten gemeinsamen Treffpunktes (TP) und einer geeigneten Treffpunktzeit (TZ) zur Aufladung der Elektrobatterie (21) des Elektrofahrzeugs (2) aufgrund des empfangenen Ladewunsches an das mobile Gerät (3) im aufzuladenden Elektrofahrzeug (2) durch die Navigationseinrichtung (51) des Ladefahrzeugs (5); und
- Umsetzen (150) von Treffpunkt (TP) und Treffpunktzeit (TZ) in Navigationsanweisungen für einen Fahrer des aufzuladenden Elektrofahrzeugs (2) durch die Software-Applikation (4) zur Navigation des Elektrofahrzeugs (2) zum gemeinsamen Treffpunkt (TP).

10. Das Verfahren (100) nach Anspruch 9, umfassend den zusätzlichen Schritt des Bestimmens (160) des gemeinsamen Treffpunkts (TP) und der Treffpunktzeit (TZ) unter Berücksichtigung zumindest einer bisherigen Route (BR) des aufzuladenden Elektrofahrzeugs (2) von der Navigationseinrichtung (51) des mobilen Ladefahrzeugs (5), wobei die Software-Applikation (4) die bisherige Route (BR) anhand von entsprechend aufgezeichneten Positionsdaten zusammen mit dem Ladewunsch an das mobile Ladefahrzeug (5) übermittelt hat.

11. Das Verfahren (100) nach Anspruch 10, wobei die Software-Applikation (4) zusätzlich zur bisherigen Route (BR) auch die für das Elektrofahrzeug (2) bis zu einem Routenziel (RZ) geplante Route (GR) an das Ladefahrzeug (5) übermittelt und die Navigationseinrichtung (51) des Ladefahrzeugs (5) die geplante Route (GR) zur Berechnung (160) des gemeinsamen Treffpunkts (TP) und der Treffpunktzeit (TZ) berücksichtigt.

12. Das Verfahren (100) nach einem der Ansprüche 9 bis 11, umfassend den zusätzlichen Schritt des zumindest periodischen Übermittelns (170) der aktuellen Position (P5) des Ladefahrzeugs (5) auf einem Weg zum gemeinsamen Treffpunkt durch die Navigationseinrichtung (51) an die Software-Applikation (4) für eine Abfrage im Elektrofahrzeug (2).

13. Das Verfahren (100) nach Anspruch 12, umfassend den zusätzlichen Schritt des Anzeigens (180) der aktuellen Position (P5) des Ladefahrzeugs (5) auf dem Weg zum gemeinsamen Treffpunkt (TP) durch die Software-Applikation (4) auf einer Navigationsanzeige im Elektrofahrzeug (2).

14. Das Verfahren (100) nach einem der Ansprüche 9 bis 13, wobei die Software-Applikation (4) alle Positionen (P5) aller Ladefahrzeuge (5) anzeigt, um eine Auswahl eines gewünschten Ladefahrzeugs (5) für die Aufladung des Elektrofahrzeugs (2) zu ermöglichen, gefolgt vom Auswählen (190) eines der angezeigten Ladefahrzeuge (5) als das Ladefahrzeug (5) für eine Aufladung der Elektrobatterie (21) des Elektrofahrzeugs (2).

15. Datenspeicherprodukt (10) mit einer auf dem Datenspeicherprodukt (10) gespeicherten Software-Applikation (4) geeignet zur Ausführung der auf die Software-Applikation (4) bezogenen Schritte des Verfahrens (100) nach einem der Ansprüche 9 bis 14.

## Claims

1. A charging system (1) for dynamically and simultaneously charging multiple electric vehicles (2), comprising a software application (4), at least installed and executed on at least one mobile device (3), which comprises a navigation function or can be connected to a navigation device (22), and on at least one server, and a plurality of mobile charging vehicles (5), each having multiple charging units (53, 54) and each having a navigation apparatus (51), which is configured, inter alia, to transmit a current position (P5) of each mobile charging vehicle (5) of the charging system (1) to the software application (4), wherein the software application (4) is configured to display at least the respective next mobile charging vehicle (5) on the mobile device (3) located in an electric vehicle (2) and, in the case of an electric battery (21) of the electric vehicle (2) to be charged, to transmit a charging request for said electric vehicle (2) and at least one current position (P2) of the electric vehicle (2) to the displayed mobile charging vehicle (5), wherein the navigation apparatus (51) of the charging vehicle (5) is configured, on the basis of the received charging request, to transmit coordinates of a suitable common meeting point (TP) and a suitable meeting time (TZ) for charging the electric battery (21) of the electric vehicle (2) to the mobile device (3) in the electric vehicle (2) to be charged, wherein the software application (4) is configured to convert the meeting point (TP) and meeting time (TZ) into navigation instructions for a driver of the electric vehicle (2) to be charged.

2. The charging system (1) according to Claim 1,
**characterized in that**
the software application (4) only generates the navigation instructions from the common meeting point (TP) and meeting time (TZ) for the electric vehicle (2) after a confirmation of the charging request at the common meeting point (TP) has been transmitted to the charging vehicle (5) via the software application (4), and/or an exchange of data between the server and the mobile device and/or a data storage and/or an exchange of data within the software application at least partially using distributed ledger technology (DLT), in particular a block chain system, is/are carried out.

3. The charging system (1) according to Claim 1 or 2,
**characterized in that**
the common meeting point (TP) and the meeting time (TZ) are determined by the navigation apparatus (51) of the mobile charging vehicle (5), taking into account at least one previous route (BR) of the electric vehicle (2) to be charged, wherein the software application (4) transmits the previous route (BR) with the charging request to the mobile charging vehicle (5) on the basis of correspondingly recorded position data, wherein, in addition to the previous route (BR), the software application (4) in particular also transmits the planned route (GR) for the electric vehicle (2) up to a route destination (RZ) to the charging vehicle (5), and the navigation apparatus (51) of the charging vehicle (5) takes into account the planned route (GR) to calculate the common meeting point (TP) and the meeting time (TZ).

4. The charging system (1) according to any one of the preceding Claims 1 to 3,
**characterized in that**
the navigation apparatus (51) of the charging vehicle (5) automatically calculates the fastest route for the charging vehicle (5) to the meeting point (TP) and displays it in the charging vehicle (5) as a driving route (FRL).

5. The charging system (1) according to any one of the preceding Claims 1 to 4,
**characterized in that**
the navigation apparatus (51) of the charging vehicle (5) transmits the current position (P5) of the charging vehicle (5) at least periodically to the software application (4) for a retrieval in the electric vehicle (2) on a path to the common meeting point (TP), wherein the software application (4) is preferably configured to display the current position (P5) of the charging vehicle (5) on the path to the common meeting point (TP) on a navigation display in the electric vehicle (2).

6. The charging system (1) according to any one of the preceding Claims 1 to 5,
**characterized in that**
the software application (4) is configured to display all positions (P5) of all charging vehicles (5) in order to enable selecting a desired charging vehicle (5) for charging the electric vehicle (2).

7. The charging system (1) according to any one of the preceding claims,
**characterized in that**
the software application (4) is configured to suggest a meeting point (TP) and/or a common meeting time (TZ) to the charging vehicle (5), which is adopted by the charging vehicle (5) as the common meeting point (TP) and common meeting time (TZ).

8. The charging system (1) according to any one of the preceding Claims 1 to 7,
**characterized in that**
the charging vehicle (5) has an energy storage and/or battery storage (52) of more than 300 kWh and at least one DC charging unit (53) and at least one AC charging unit (54).

9. A method (100) for dynamically and simultaneously charging multiple electric vehicles in a charging system according to any one of Claims 1 to 8, comprising a software application (4), at least installed and executed on a mobile device (3), which comprises a navigation function or respectively can be connected to a navigation device (22), and a plurality of mobile charging vehicles (5), each having multiple charging units (53, 54) and each having a navigation apparatus (51), comprising the following steps:
- transmitting (110) current positions (P5) of each mobile charging vehicle (5) of the charging system (1) to the software application (4) by the navigation apparatus (51) of the charging vehicle (5);
- displaying (120) at least the respective next mobile charging vehicle (5) on the mobile device (3) located in an electric vehicle (2) by the software application;
- transmitting (130) by the software application a charging request for the electric vehicle (2) and at least one current position (P2) of the electric vehicle (2) to the displayed mobile charging vehicle (5) in the case of an electric battery (21) of the electric vehicle (2) to be charged;
- transmitting (140) coordinates of a suitable common meeting point (TP) and a suitable meeting time (TZ) for charging the electric battery (21) of the electric vehicle (2) on the basis of the received charging request to the mobile device (3) in the electric vehicle (2) to be charged by the navigation apparatus (51) of the charging vehicle (5); and
- converting (150) by the software application (4) of meeting point (TP) and meeting time (TZ) into navigation instructions for a driver of the electric vehicle (2) to be charged for navigating the electric vehicle (2) to the common meeting point (TP).

10. The method (100) according to Claim 9, comprising the additional step of determining (160) the common meeting point (TP) and the meeting time (TZ), taking into account at least one previous route (BR) of the electric vehicle (2) to be charged from the navigation apparatus (51) of the mobile charging vehicle (5), wherein the software application (4) has transmitted the previous route (BR) together with the charging request to the mobile charging vehicle (5) on the basis of correspondingly recorded position data.

11. The method (100) according to Claim 10, wherein the software application (4) also transmits, in addition to the previous route (BR), the planned route (GR) for the electric vehicle (2) up to a route destination (RZ) to the charging vehicle (5), and the navigation apparatus (51) of the charging vehicle (5) takes into account the planned route (GR) for calculating (160) the common meeting point (TP) and the meeting time (TZ).

12. The method (100) according to any one of Claims 9 to 11, comprising the additional step of at least periodically transmitting (170) the current position (P5) of the charging vehicle (5) on a path to the common meeting point by the navigation apparatus (51) to the software application (4) for a retrieval in the electric vehicle (2).

13. The method (100) according to Claim 12, comprising the additional step of displaying (180) the current position (P5) of the charging vehicle (5) on the path to the common meeting point (TP) by the software application (4) on a navigation display in the electric vehicle (2).

14. The method (100) according to any one of Claims 9 to 13, wherein the software application (4) displays all positions (P5) of all charging vehicles (5) in order to make it possible to select a desired charging vehicle (5) for charging the electric vehicle (2), followed by selecting (190) one of the displayed charging vehicles (5) as the charging vehicle (5) for charging the electric battery (21) of the electric vehicle (2).

15. A data storage product (10) with a software application (4) stored on the data storage product (10) suitable for executing the steps of the method (100) related to the software application (4) according to any one of Claims 9 to 14.

## Revendications

1. Système de charge (1) destiné à la charge dynamique et simultanée de plusieurs véhicules électriques (2) comprenant une application logicielle (4) installée et exécutée au moins sur au moins un appareil mobile (3), qui comprend une fonction de navigation ou qui peut être connecté à un appareil de navigation (22), et sur au moins un serveur, ainsi qu'une pluralité de véhicules de charge mobiles (5) munis chacun de plusieurs unités de charge (53, 54) ainsi que chacun d'un dispositif de navigation (51), qui est entre autres conçu pour communiquer à l'application logicielle (4) une position instantanée (P5) de chacun des véhicules de charge mobiles (5) du système de charge (1), dans lequel l'application logicielle (4) est conçue pour afficher sur l'appareil mobile (3) se trouvant dans un véhicule électrique (2) au moins le véhicule de charge mobile respectivement suivant (5) et pour, dans le cas d'une batterie électrique (21) du véhicule électrique (2) à recharger, communiquer au véhicule de charge mobile affiché (5) une demande de charge pour ce véhicule électrique (2) ainsi qu'au moins une position instantanée (P2) du véhicule électrique (2), dans lequel le dispositif de navigation (51) du véhicule de charge (5) est conçu pour, sur la base de la demande de charge reçue, communiquer à l'appareil mobile (3) dans le véhicule électrique (2) à recharger des coordonnées d'un point de rencontre (TP) commun approprié et d'une heure de rencontre (TZ) appropriée pour la charge de la batterie électrique (21) du véhicule électrique (2), dans lequel l'application logicielle (4) est conçue pour convertir le point de rencontre (TP) et l'heure de rencontre (TZ) en instructions de navigation pour un conducteur du véhicule électrique (2) à recharger.

2. Système de charge (1) selon la revendication 1,
**caractérisé en ce que**
l'application logicielle (4) ne génère les instructions de navigation à partir des point de rencontre (TP) et de l'heure de rencontre (TZ) en commun pour le véhicule électrique (2) qu'après qu'une confirmation de la demande de charge au niveau du point de rencontre commun (TP) n'ait été communiquée au véhicule de charge (5) par le biais de l'application logicielle (4) et/ou qu'un échange de données n'ait été effectué entre le serveur et l'appareil mobile et/ou un stockage de données et/ou un échange de données à l'intérieur de l'application logicielle en utilisant au moins partiellement la technologie de registre distribué (DLT), en particulier un système de chaîne de blocs.

3. Système de charge (1) selon la revendication 1 ou 2,
**caractérisé en ce que**
le point de rencontre commun (TP) et l'heure de rencontre (TZ) sont déterminés par le dispositif de navigation (51) du véhicule de charge mobile (5) en prenant en compte au moins un itinéraire précédent (BR) du véhicule électrique (2) à recharger, dans lequel l'application logicielle (4) communique l'itinéraire précédent (BR) au véhicule de charge mobile (5) à l'aide de données de position enregistrées correspondantes avec la demande de charge, dans lequel en particulier l'application logicielle (4) communique au véhicule de charge (5), en plus de l'itinéraire précédent (BR), également l'itinéraire prévu (GR) pour le véhicule électrique (2) jusqu'à une cible d'itinéraire (RZ) et le dispositif de navigation (51) du véhicule de charge (5) prend en compte l'itinéraire prévu (GR) pour calculer le point de rencontre commun (TP) et l'heure de rencontre (TZ).

4. Système de charge (1) selon l'une des revendications précédentes 1 à 3,
**caractérisé en ce que**
le dispositif de navigation (51) du véhicule de charge (5) calcule automatiquement l'itinéraire le plus rapide pour le véhicule de charge (5) jusqu'au point de rencontre (TP) et l'affiche dans le véhicule de charge (5) comme un itinéraire de conduite (FRL).

5. Système de charge (1) selon l'une des revendications précédentes 1 à 4,
**caractérisé en ce que**
le dispositif de navigation (51) du véhicule de charge (5) sur un chemin vers le point de rencontre commun (TP) communique à l'application logicielle (4) au moins périodiquement la position instantanée (P5) du véhicule de charge (5) pour une récupération dans le véhicule électrique (2), dans lequel de préférence l'application logicielle (4) est conçue pour afficher sur un écran de navigation dans le véhicule électrique (2) la position instantanée (P5) du véhicule de charge (5) sur le chemin vers le point de rencontre commun (TP).

6. Système de charge (1) selon l'une des revendications précédentes 1 à 5,
**caractérisé en ce que**
l'application logicielle (4) est conçue pour afficher toutes les positions (P5) de tous les véhicules de charge (5) afin de permettre la sélection d'un véhicule de charge demandé (5) pour la charge du véhicule électrique (2).

7. Système de charge (1) selon l'une des revendications précédentes,
**caractérisé en ce que**
l'application logicielle (4) est conçue pour proposer au véhicule de charge (5) un point de rencontre (TP) et/ou une heure de rencontre commune (TZ) qui sont adoptés par le véhicule de charge (5) comme point de rencontre commun (TP) et heure de rencontre commune (TZ).

8. Système de charge (1) selon l'une des revendications précédentes 1 à 7,
**caractérisé en ce que**
le véhicule de charge (5) dispose d'un stockage d'énergie et/ou d'un stockage de batterie (52) supérieur à 300 kWh et d'au moins une unité de charge en courant continu (53) et d'au moins une unité de charge en courant alternatif (54).

9. Procédé (100) destiné à la charge dynamique et simultanée de plusieurs véhicules électriques dans un système de charge selon l'une des revendications 1 à 8, comprenant une application logicielle (4) installée et exécutée au moins sur au moins un appareil mobile (3), qui comprend une fonction de navigation ou qui peut être connecté respectivement à un appareil de navigation (22), ainsi qu'une pluralité de véhicules de charge mobiles (5) munis chacun de plusieurs unités de charge (53, 54) ainsi que chacun d'un dispositif de navigation (51), comprenant les étapes suivantes :
- communiquer (110) à l'application logicielle (4) des positions instantanées (P5) de chacun des véhicules de charge mobiles (5) du système de charge (1) par le biais du dispositif de navigation (51) du véhicule de charge (5) ;
- afficher (120) sur l'appareil mobile (3) se trouvant dans un véhicule électrique (2) au moins le véhicule de charge mobile respectivement suivant (5) par le biais de l'application logicielle ;
- communiquer (130) au véhicule de charge mobile (5) affiché une demande de charge pour le véhicule électrique (2) ainsi qu'au moins une position instantanée (P2) du véhicule électrique (2) dans le cas d'une batterie électrique (21) du véhicule électrique (2) à recharger, par le biais de l'application logicielle ;
- communiquer (140) à l'appareil mobile (3) dans le véhicule électrique (2) à recharger des coordonnées d'un point de rencontre (TP) commun approprié et d'une heure de rencontre (TZ) appropriée pour la charge de la batterie électrique (21) du véhicule électrique (2) sur la base de la demande de charge reçue par le biais du dispositif de navigation (51) du véhicule de charge (5) ; et
- convertir (150) le point de rencontre (TP) et l'heure de rencontre (TZ) en instructions de navigation pour un conducteur du véhicule électrique (2) à recharger par le biais de l'application logicielle (4) pour la navigation du véhicule électrique (2) vers le point de rencontre (TP) commun.

10. Procédé selon la revendication 9, comprenant l'étape supplémentaire destinée à déterminer (160) le point de rencontre commun (TP) et l'heure de rencontre (TZ) en prenant en compte au moins un itinéraire précédent (BR) du véhicule électrique (2) à recharger par le dispositif de navigation (51) du véhicule de charge mobile (5), dans lequel l'application logicielle (4) a communiqué l'itinéraire précédent (BR) au véhicule de charge mobile (5) à l'aide de données de position enregistrées correspondantes conjointement avec la demande de charge.

11. Procédé selon la revendication 10, dans lequel l'application logicielle (4) communique au véhicule de charge (5), en plus de l'itinéraire précédent (BR), également l'itinéraire prévu (GR) pour le véhicule électrique (2) jusqu'à une cible d'itinéraire (RZ) et le dispositif de navigation (51) du véhicule de charge (5) prend en compte l'itinéraire prévu (GR) pour calculer (160) le point de rencontre commun (TP) et l'heure de rencontre (TZ).

12. Procédé (100) selon l'une des revendications 9 à 11, comprenant l'étape supplémentaire destinée à communiquer (170) au moins périodiquement à l'application logicielle (4) la position instantanée (P5) du véhicule de charge (5) sur un chemin vers le point de rencontre commun par le biais du dispositif de navigation (51) pour une récupération dans le véhicule électrique (2).

13. Procédé selon la revendication 12, comprenant l'étape supplémentaire destinée à afficher (180) la position instantanée (P5) du véhicule de charge (5) sur le chemin vers le point de rencontre commun (TP) par le biais de l'application logicielle (4) sur un écran de navigation dans le véhicule électrique (2).

14. Procédé (100) selon l'une des revendications 9 à 13, dans lequel l'application logicielle (4) affiche toutes les positions (P5) de tous les véhicules de charge (5) afin de permettre la sélection d'un véhicule de charge demandé (5) pour la charge du véhicule électrique (2), puis de sélectionner (190) un des véhicules de charge affichés (5) comme véhicule de charge (5) pour une charge de la batterie électrique (21) du véhicule électrique (2).

15. Produit de stockage de données (10) muni d'une application logicielle (4) stockée sur le produit de stockage de données (10) et approprié pour réaliser les étapes du procédé (100) en rapport avec l'application logicielle (4) selon l'une des revendications 9 à 14.
